# EUROPÄISCHE PATENTANMELDUNG

(11) **EP 3 407 447 A1**
(43) Veröffentlichungstag der Anmeldung: **28.11.2018**
(21) Anmeldenummer: 17172817.3
(22) Anmeldetag: 24.05.2017
(51) Int. Cl.: H02J 1/10, H02J 7/34, H02J 1/16

(54) **HOCHREDUNDANTES GLEICHSPANNUNGSNETZ**

(71) Anmelder: Siemens Aktiengesellschaft, 80333 München (DE)
(72) Erfinder: GRITSCH, Christian, 90491 Nürnberg (DE)

(57) **Zusammenfassung**

Die Erfindung betrifft ein Gleichspannungsnetz (1) mit Gleichspannungsteilnetzen und Energiespeichern. Zur Verbesserung des Gleichspannungsnetzes wird vorgeschlagen, dass das Gleichspannungsnetz (1) mindestens drei Gleichspannungsteilnetze (10), mindestens drei Energiespeichernetze (13), mindestens neun Leistungswandler (20) und mindestens drei Energiespeicher (4) aufweist, wobei jedes Gleichspannungsteilnetz (10) mit jedem Energiespeichernetz (13) über mindestens einen Leistungswandler (20) verbunden ist, wobei jedes Energiespeichernetz (13) derart jeweils mit mindestens einem der Energiespeicher (4) verbunden ist, dass das jeweilige Energiespeichernetz (13) die Spannung des jeweiligen Energiespeichers (4) aufweist, wobei jedes Gleichspannungsteilnetz (10) über mindestens eine Einspeisevorrichtung (5) mit mindestens einem Wechselspannungsnetz (6) verbindbar ist. Die Erfindung betrifft ferner ein Fahrzeug, insbesondere ein Schiff mit einem derartigen Gleichspannungsnetz (1). Weiter betrifft die Erfindung ein Verfahren zur Steuerung eines derartigen Gleichspannungsnetzes (1).

## Beschreibung

Die Erfindung betrifft ein Gleichspannungsnetz mit Gleichspannungsteilnetzen und Energiespeichern. Weiter betrifft die Erfindung ein Fahrzeug mit einem derartigen Gleichspannungsnetz. Ferner betrifft die Erfindung ein Verfahren zur Steuerung eines derartigen Gleichspannungsnetzes.

Heutzutage werden Frequenzumrichter zu immer größeren Verbänden ausgedehnt und haben neben der klassischen Funktion, nur einen Motor zu regeln, auch die Möglichkeit Netzeinspeisung zu sein (z.B. bei Windkraftanlagen) oder bilden sogar ein ganzes Gleichspannungsnetz, auch als DC-Netz bezeichnet. Hier sollen nun ein Gleichspannungsnetz betrachtet werden, bei dem elektrische Vorrichtungen wie Verbraucher und Quellen elektrische Energie austauschen. Die Versorgung des Gleichspannungsnetzes mit elektrischer Energie erfolgt mit Hilfe eines oder mehrerer Stromrichter aus einem Wechselspannungsnetz.

Ein typisches Anwendungsbeispiel für ein Gleichspannungsnetz ist die Energieversorgung innerhalb eines Schiffes oder eines Fahrzeugs, insbesondere eines Schienenfahrzeugs. Mit Hilfe des Gleichspannungssystems wird elektrische Energie an einzelne Verbraucher verteilt. Dabei soll auch im Fehlerfall immer noch ein Teil der vorhandenen Antriebe und Einrichtungen funktionieren. Dies wird als Redundanz bezeichnet.

Das maximale an Redundanz wird bei Dynamic Positioning 3 (DP3) bei der Zulassung von Schiffen gefordert. Hier werden heutzutage die Schiffe in drei Zonen, auch als Sektoren bezeichnet, aufgeteilt, die dann drei unabhängige Systeme aufweisen. Hier sind drei getrennte Switchboards notwendig, die dann von drei unabhängigen Quellen gespeist werden.

Gegenwärtig wird ein Gleichspannungsnetz mit Sicherungen und Trennern ausgestattet, um im Fehlerfall die Fehlerquelle vom Netz trennen und den Betrieb der übrigen Verbraucher aufrecht erhalten zu können. Bei einem Kurzschluss kann allerdings nicht ausgeschlossen werden, dass elektrische Komponenten, die mit dem Gleichspannungsnetz verbunden sind, geschädigt werden. Diese Schädigung kann zum Ausfall der entsprechenden elektrischen Komponente führen. Um dies zu verhindern werden teilweise schnelle Schalter eingesetzt, welche die schädigende Wirkung des Kurzschlusses reduzieren sollen.

Der Erfindung liegt die Aufgabe zugrunde ein Gleichspannungsnetz zu verbessern.

Die Aufgabe wird durch ein Gleichspannungsnetz mit mindestens drei Gleichspannungsteilnetzen, mindestens drei Energiespeichernetzen, mindestens neun Leistungswandlern, mindestens drei Energiespeichern gelöst, wobei jedes Gleichspannungsteilnetz mit jedem Energiespeichernetz über mindestens einen Leistungswandler verbunden ist, wobei jedes Energiespeichernetz derart jeweils mit mindestens einem der Energiespeicher verbunden ist, dass das jeweilige Energiespeichernetz die Spannung des jeweiligen Energiespeichers aufweist, wobei jedes Gleichspannungsteilnetz über mindestens eine Einspeisevorrichtung mit mindestens einem Wechselspannungsnetz verbindbar ist. Weiter wird die Aufgabe durch ein Fahrzeug, insbesondere ein Schiff, mit einem derartigen Gleichspannungsnetz gelöst. Ferner wird die Aufgabe durch ein Verfahren zur Steuerung eines derartigen Gleichspannungsnetzes gelöst, wobei bei Auftreten eines Fehlers im Gleichspannungsnetz abhängig vom Ort des Fehlers mindestens einer der Leistungswandler abgeschaltet wird.

Weitere vorteilhafte Ausgestaltungen der Erfindung sind in den abhängigen Ansprüchen angegeben.

Der Erfindung liegt die Erkenntnis zugrunde, dass sich die Redundanz des Gleichspannungsnetzes auf ein aus der Schiffszulassung bekanntes Level DP3 und sogar darüber hinaus steigern lässt, wenn in dem Gleichspannungsnetz drei Energiespeichernetze mit jeweils mindestens einem Energiespeicher gebildet werden. Damit lässt sich ein Energieaustausch mit elektrische Vorrichtungen, dazu zählen sowohl Verbraucher wie auch Quellen, zuverlässig durchführen.

Das schwächste Glied beim Betrieb eines Energieversorgungsnetzes, beispielsweise auf einem Schiff, sind die Energieerzeuger, die Dieselmotoren, weil diese aufgrund der hohen mechanischen Komplexität die geringste Zuverlässigkeit haben. Ersetzt man nun Dieselmotoren, durch batteriegepufferte Umrichter als Energiequelle, hat man bereits erheblich an Zuverlässigkeit gewonnen. Neben der Batterie können auch andere Energiespeicher verwendet werden. Mit der 3 x 3 Matrixanordnung, hat man nicht nur die wesentlich zuverlässigeren Umrichter als Energiequellen (oder zumindest als back-up, für Generatorausfall, dies hängt vom Betriebskonzept ab), sondern man kann sogar bei Ausfall eines Energiespeichers immer noch alle drei Gleichspannungsteilnetze versorgen. Mit anderen Worten ist die Redundanz wegen der Matrixanordnung höher als die Redundanz bei bereits bekannter normaler Dreikanaligkeit. Diese Anordnung macht es auch möglich, dass man auch bei DP3 den Energiefluss im Schiffnetz nicht mehr mit einem 3-phasigen AC-Bus realisiert, sondern mit dem DC-Bus. Dies hat auch den Vorteil, dass man Energieumwandlungsstufen sowie Verkabelungsaufwand reduziert.

Bei Ausfall der Energieversorgung aus einem speisenden Netz kann mit Hilfe des Energiespeichers der Energieaustausch mit den elektrischen Vorrichtungen aufrecht erhalten werden. Das Energiespeichernetz kann ein Gleichspannungsnetz oder ein Wechselspannungsnetz sein. Die Verwendung eines Gleichspannungsnetzes eignet sich besonders für Energiespeicher mit einer Gleichspannung. D.h. an den Klemmen weisen diese Speicher im Betrieb eine Gleichspannung auf. Typische Vertreter für diese Energiespeicherart sind Batterien und Kondensatoren (beispielsweise Doppelschichtkondensatoren wie UltraCaps).

Diese mindestens drei Gleichspannungsteilnetze und die mindestens drei Energiespeichernetze sind mit Hilfe von Leistungsstellern miteinander verbunden. Als Leistungssteller können DC/DC Spannungswandler, insbesondere bidirektionale DC/DC Spannungswandler, auch als DCP bekannt, oder Stromrichter verwendet werden. Stromrichter übertragen Energie zwischen einer Gleichspannungsseite und einer Wechselspannungsseite. Für die Anwendung in einem Gleichspannungsnetz sind bidirektionale Stromrichter von besonderem Interesse, da sie einen Energiefluss in beide Richtungen, also von der Wechselspannungsseite zur Gleichspannungsseite sowie von der Gleichspannungsseite zur Wechselspannungsseite ermöglichen. Diese Leistungssteller sind zwischen Gleichspannungsteilnetzen und den Energiespeichernetzen angeordnet und ermöglichen den kontrollierten Austausch von Energie zwischen diesen Netzen. Durch die Leistungssteller ist es möglich, Energiespeicher direkt mit dem Energiespeichernetz zu verbinden. Das Stellen der Spannung, insbesondere zur Leistungsregelung, erfolgt dann über die mit dem Energiespeichernetz verbundenen Leistungsstellern. Damit können Batterien und/oder Ultracaps in einem DC Energiespeichernetz oder rotierende Speicher in einem AC Gleichspannungsnetz geladen bzw. entladen werden.

Durch die Schaffung dreier Batterie-Sektoren, die ein Energiespeichernetz mit einem Energiespeicher aufweisen und die mit jeweils einer Anzahl von Leistungswandlern verbunden sind, kann die Gleichspannung in allen drei Batterie-Segmenten nach Belieben realisieren kann. Diese Anordnung ergänzt man jeweils mit einem zusätzlichen Leistungswandler und dadurch wird eine Matrix-Anordnung geschaffen, die es ermöglicht, dass man von jeder Batterie jedes der drei Gleichspannungsteilnetze speisen kann. Dabei funktioniert der Energiefluss in vorteilhafter Weise in beide Richtungen über den Leistungswandler um die Batterien zu laden. Damit hat man wie oben aufgeführt, nicht nur ein Back-up für den nicht so zuverlässigen Dieselmotor geschaffen, welches bei Ausfall eines Dieselmotors zur Verfügung steht, sondern vielmehr ein dreikanaliges redundantes Speisesystem geschaffen, welches durch die 3 x 3 Matrixanordnung die Forderungen von Zulassungsbehörden übertrifft. Zusätzlich ist der Energietransfer zwischen den Gleichspannungsteilnetzen und den einzelnen Segmenten des Gleichspannungsnetzes möglich.

In allen Teilnetzen lässt sich mittels der Leistungssteller die Spannung nach Belieben steuern oder regeln. Im Energiespeichernetz wird die Spannung je nach Betriebsart des dort angeschlossenen Energiespeichers geregelt. Damit haben die Leistungssteller mehrere Funktionen. Zum einen ist dies die sichere Trennung der einzelnen Teilnetze beispielsweise für den Fehlerfall. Darüber hinaus regeln oder steuern die Leistungssteller den Leistungsaustausch zwischen den Teilnetzen. Des Weiteren wird die Spannung am Energiespeichernetz so eingestellt, dass nach Bedarf der Energiespeicher geladen oder entladen wird. Dieses System verschafft eine deutliche Verbesserung der Zuverlässigkeit bei Einsatz nur weniger Komponenten, da beispielsweise auf ein Batterieladegerät verzichtet werden kann.

Bei Kurzschluss in einem Teilnetz können die beiden anderen Teilnetze weiter betrieben werden. D.h. die Batteriepufferung bleibt erhalten. Insbesondere im Einsatzfall "Schiffsantrieb" ist dies von großer Bedeutung und wird bei der Schiffsabnahme geprüft. Bei Verwendung von Schaltern anstelle von Leistungsstellern bewirkt der Ausfall eines Schalters, dass die Anlage nicht mehr sicher betrieben werden kann. Bei Ausfall eines Leistungsstellers kann noch immer mindestens ein Gleichspannungsteilnetz die angeschlossenen Verbraucher versorgen. Somit kann beispielsweise bei einem Schiff noch die Hälfte der Antriebsleitung erbracht werden.

Besonders vorteilhaft ist das Gleichspannungsnetz, wenn es ein Inselnetz darstellt. Dies ist beispielsweise auf Schiffen oder in Fahrzeugen, insbesondere in Schienenfahrzeugen, der Fall. Die Belastung durch große Verbraucher, insbesondere das Ein- und Ausschalten von großen Verbrauchern kann durch die Bereitstellung von Energie aus dem Energiespeicher verringert werden. Auswirkungen auf andere Komponenten, beispielsweise durch einen Einbruch in der DC-Spannung oder einer kurzfristigen Überspannung, können durch die hohe Dynamik des Leistungsstellers vollständig, zumindest größtenteils, vermieden werden.

Bei der Anwendung auf einem Schiff wird durch die hohe Redundanz die Manövrierfähigkeit zuverlässig sichergestellt.

Bei einer vorteilhaften Ausgestaltung der Erfindung weisen die Leistungswandler jeweils einen Gleichspannungswandler auf und die Spannung der Energiespeicher ist eine Gleichspannung. Gleichspannungswandler werden oftmals auch als DC/DC Wandler bezeichnet. Vorteilhafterweise sollte dieser einen bidirektionalen Energiefluss erlauben. Diese DC/DC Wandler werden dann auch als DCP bezeichnet. Mit diesem lassen sich die Gleichspannungen im Gleichspannungsnetz besonders dynamisch einstellen. So kann auf einen Fehlerfall derart schnell reagiert werden, dass es zu keinen Beschädigungen an elektrischen Vorrichtungen kommt. Darüber hinaus können Energiespeicher mit Gleichspannung, wie beispielsweise Batterien oder Kondensatoren, insbesondere Doppelschichtkondensatoren wie UltraCaps, direkt mit dem Energiespeichernetz verbunden werden. Auf zusätzliche Ladegeräte, die oft zur Entkopplung mit den anderen Komponenten im System ein relativ langsames Regelverhalten aufweisen, kann dann verzichtet werden.

Darüber hinaus hat es sich als vorteilhaft erwiesen, wenn der Gleichspannungswandler eine Potentialtrennung aufweist. Damit können gerade bei einem Erdschluss Fehlerströme vermieden werden. Gleichzeitig bleibt bei Vorliegen eines Erdschlusses teilweise sogar das gesamte Gleichspannungsnetz betriebsfähig.

Bei einer weiteren vorteilhaften Ausgestaltung der Erfindung weisen die Leistungswandler jeweils einen Stromrichter auf und die Spannung der Energiespeicher ist eine Wechselspannung. Stromrichter ermöglichen eine Energieübertragung zwischen einem Gleichspannungs- und einem Wechselspannungsnetz. Besonders vorteilhaft ist die Verwendung von bidirektionalen Stromrichtern, da mit diesen eine Energieübertragung in beide Richtungen möglich ist. Damit können Energiespeicher in dem Energiespeichernetz mit Wechselspannung geregelt oder gesteuert geladen oder entladen werden. Als Energiespeicher mit einem Wechselspannungsanschluss kommen beispielsweise rotierende Speicher wie Schwungmassenspeicher in Frage. Auf ein sonst übliches Stellglied, einen Umrichter, kann verzichtet werden. Dies spart Kosten. Gleichzeitig kann mit dem Stromrichter eine besonders hohe Regeldynamik erreicht werden, um auf Fehlerfälle derart schnell reagieren zu können, um Beschädigungen an anderen Komponenten des Gleichspannungsnetzes zu vermeiden. Auch hier kann beispielsweise mittels eines Transformators auf besonders einfache Weise eine galvanische Trennung der Teilnetze voneinander erreicht werden. Damit können gerade beim Auftreten eines Erdschluss Fehlerströme vermieden werden. Gleichzeitig bleibt bei Vorliegen eines Erdschlusses teilweise sogar das gesamte Gleichspannungsnetz betriebsfähig.

Bei einer weiteren vorteilhaften Ausgestaltung der Erfindung weist das Gleichspannungsnetz mindestens einen Verbindungswandler auf, wobei mittels des Verbindungswandlers zwei der Gleichspannungsteilnetze miteinander verbunden sind. Durch den Verbindungswandler kann direkt ein Energieaustausch zwischen zwei Gleichspannungsteilnetzen erreicht werden. Ein Umweg über das Energiespeichernetz kann vermieden werden. Damit muss die Energie auf dem Weg von dem ersten Gleichspannungsteilnetz zum zweiten Gleichspannungsteilnetz nur einen Wandler passieren. In einer einfachen Ausführungsform ist der Verbindungswandler ein Gleichspannungswandler. Durch die direkte Verbindung der Gleichspannungsteilnetze kann eine Auswirkung auf das Energiespeichernetz vermieden werden. Dadurch sind weniger Spannungsschwankungen im Energiespeichernetz zu beobachten. In Folge dessen steigt die Lebenserwartung der mit dem Energiespeichernetz verbundenen Energiespeicher. Darüber hinaus können die Leistungswandler kleiner bemessen werden, da sie nur für die Leistung des Energiespeichers ausgelegt sein müssen. Damit können die Kosten für die Realisierung des Gleichspannungsnetzes reduziert werden.

Bei einer weiteren vorteilhaften Ausgestaltung der Erfindung sind die Verbindungswandler in einer Sternschaltung angeordnet, wobei die Verbindungswandler als Stromrichter ausgebildet sind, wobei ein Sternpunkt der Verbindungswandler ein Wechselspannungshilfsnetz bildet. Mit Hilfe des Wechselspannungshilfsnetzes kann nicht nur ein Energieaustausch zwischen den Gleichspannungsteilnetzen erfolgen sondern auch eine Versorgung von Wechselspannungsverbrauchern realisiert werden. Dabei kann das Wechselspannungshilfsnetz als einphasiges Netz ausgebildet sein, wenn als Verbindungswandler einphasige Stromrichter zur Anwendung kommen. Ebenfalls ist es möglich, dass das Wechselspannungshilfsnetz als mehrphasiges Netz, insbesondere als dreiphasiges Drehstromnetz, ausgebildet ist. Dies ermöglicht auch dreiphasige Lasten oder Quellen auf einfache Weise mit dem Gleichspannungsnetz zu verbinden. Dazu werden dann mehrphasige, insbesondere dreiphasige Stromrichter als Verbindungswandler verwendet.

Dabei werden die Stromrichter Wechselspannungsseitig alle mit dem Wechselspannungshilfsnetz verbunden. Dieses bildet damit eine Art Sternpunkt. Gleichspannungsseitig sind die Stromrichter mit unterschiedlichen Gleichspannungsteilnetzen verbunden. Ein Energieaustausch zwischen zwei Gleichspannungsteilnetzen erfolgt dann über zwei der Verbindungswandler.

Bei einer weiteren vorteilhaften Ausgestaltung der Erfindung sind die Einspeisevorrichtungen mit dem Wechselspannungsnetz verbunden, wobei das Wechselspannungsnetz als dreiphasiges Drehstromnetz ausgebildet ist, wobei die unterschiedlichen Phasen des dreiphasigen Drehstromnetzes elektrische Energie in unterschiedliche Gleichspannungsteilnetze einspeisen.

Durch die drei Gleichspannungsteilnetze und die drei Phasen des Drehstromsystems steht bei dieser Energieversorgung für jedes Gleichspannungsteilnetz genau eine Phase des Drehstromnetzes zur Verfügung. Somit können für die Einspeiseschaltung einphasige Stromrichter zum Einsatz kommen. Dies macht die Einspeiseschaltung kostengünstig bei gleichzeitig hoher Redundanz über die unterschiedlichen Phasen des Drehstromnetzes.

Im Folgenden wird die Erfindung anhand des in der Figur dargestellten Ausführungsbeispiels näher beschrieben und erläutert. Es zeigen:

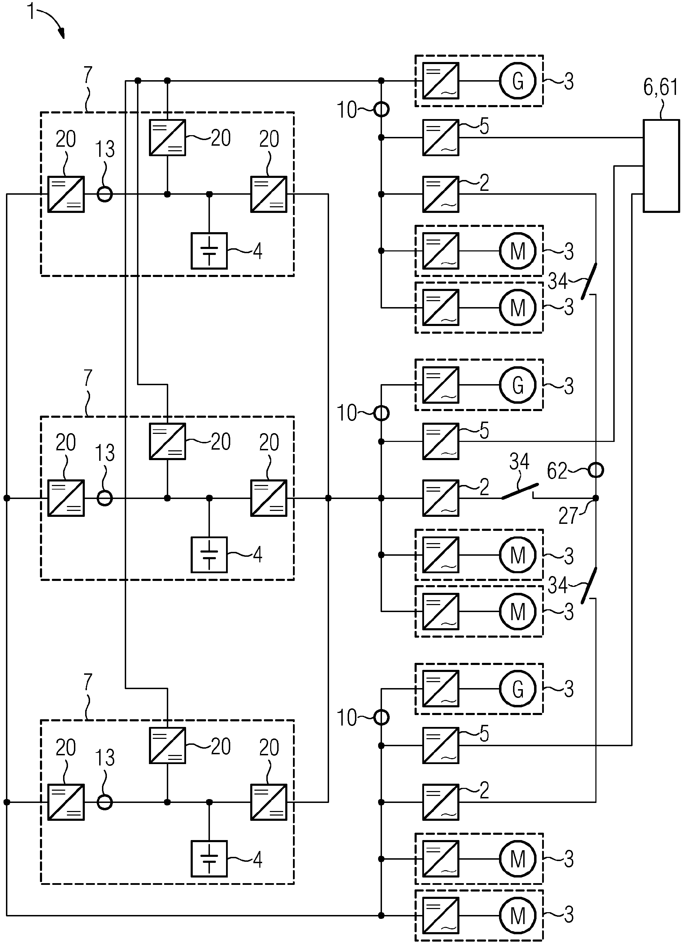

FIG 1 Ausführungsbeispiele für ein Gleichspannungsnetz

Die FIG 1 zeigt ein Gleichspannungsnetz 1 mit drei Gleichspannungsteilnetzen 10 sowie drei Energiespeichernetzen 13. Diese bilden drei Batteriesektionen 7. Die Teilnetze sind mit Leistungswandlern 20 derart miteinander verbunden, dass ein Energieaustausch zwischen den Gleichspannungsteilnetzen 10 und Energiespeichernetzen 13 direkt möglich ist. Gleichzeitig ermöglichen die Leistungswandler 20 die Teilnetze schnell voneinander zu trennen. An die Gleichspannungsteilnetze 10 sind elektrische Vorrichtungen 3 angeschlossen, die elektrische Verbraucher oder eine Quelle darstellen. Elektrische Energie erhalten diese elektrische Vorrichtungen 3 aus einem Wechselspannungsnetz 6, das über Einspeisevorrichtungen 5 mit den Gleichspannungsteilnetzen 10 verbunden ist. Alternativ oder zusätzlich kann auch elektrische Energie aus den Energiespeichern 4, der mit dem Energiespeichernetz 13 direkt verbunden ist, bereitgestellt oder gespeichert werden. Die Regelung bzw. Steuerung des Energieflusses zum Energiespeicher 4 erfolgt mit Hilfe der Leistungssteller 20. Besonders vorteilhaft ist es, wenn das Wechselspannungsnetz als Drehstromnetz 61 ausgeführt ist.

Mit Hilfe der Leistungssteller 20 kann der Energiefluss schnell unterbrochen werden, um beispielsweise fehlerhafte Komponenten vom Gesamtsystem zu isolieren. Damit kann nicht nur ein Betrieb der übrigen elektrischen Vorrichtungen 3 sichergestellt werden, sondern auch eine Beschädigung dieser elektrischen Vorrichtungen 3, beispielsweise verursacht durch Überstrom oder Überspannung, kann zuverlässig durch eine schnelle Reaktion der Leistungswandler 20 vermieden werden.

Bei dem hier dargestellten Energiespeicher 4 handelt es sich um eine Batterie. Alternativ kann hier auch ein Kondensator, insbesondere ein Doppelschichtkondensator, eingesetzt werden. Diesen Energiespeichern ist gemeinsam, dass sie im Betrieb eine Gleichspannung aufweisen. Daher kommen in diesem Ausführungsbeispiel Gleichspannungswandler, auch als DC/DC Wandler bezeichnet, als Leistungssteller 20 zum Einsatz.

Um einen Energieaustausch zwischen den einzelnen Gleichspannungsteilnetzen 10 zu ermöglichen, stehen Verbindungswandler 2 zur Verfügung. Die Verbindungswandler 2 sind in diesem Ausführungsbeispiel als Stromrichter ausgebildet. Dies können einphasige Stromrichter sein, dann ist das Wechselspannungshilfsnetz 62 ein einphasiges Wechselspannungsnetz oder mehrphasige, insbesondere dreiphasige, Stromrichter sein, dann ist das Wechselspannungshilfsnetz 62 ein mehrphasiges, insbesondere dreiphasiges Wechselspannungsnetz. Wechselspannungsseitig sind diese Stromrichter an einem Sternpunkt 27 miteinander verbunden. Um bei Ausfall eines Stromrichters diesen vom Wechselspannungshilfsnetz 62 trennen zu können sind Schalter 34 vorhanden.

Anhand des Schaltbildes ist zu erkennen, dass selbst bei Ausfall von zwei beliebigen Komponenten des Gleichspannungsnetzes noch immer das Netz betriebsfähig bleibt. Selbst bei Ausfall noch mehr Komponenten kann in vielen Fällen noch immer ein Betrieb gewährleistet werden. Somit stellt diese Anordnung ein hochredundantes Gleichspannungsnetz 1 dar.

Zusammenfassend betrifft die Erfindung ein Gleichspannungsnetz mit Gleichspannungsteilnetzen und Energiespeichern. Zur Verbesserung des Gleichspannungsnetzes wird vorgeschlagen, dass das Gleichspannungsnetz mindestens drei Gleichspannungsteilnetze, mindestens drei Energiespeichernetze, mindestens neun Leistungswandler und mindestens drei Energiespeicher aufweist, wobei jedes Gleichspannungsteilnetz mit jedem Energiespeichernetz über mindestens einen Leistungswandler verbunden ist, wobei jedes Energiespeichernetz derart jeweils mit mindestens einem der Energiespeicher verbunden ist, dass das jeweilige Energiespeichernetz die Spannung des jeweiligen Energiespeichers aufweist, wobei jedes Gleichspannungsteilnetz über mindestens eine Einspeisevorrichtung mit mindestens einem Wechselspannungsnetz verbindbar ist. Die Erfindung betrifft ferner ein Fahrzeug, insbesondere ein Schiff mit einem derartigen Gleichspannungsnetz. Weiter betrifft die Erfindung ein Verfahren zur Steuerung eines derartigen Gleichspannungsnetzes.

## Patentansprüche

1. Gleichspannungsnetz (1), aufweisend
- mindestens drei Gleichspannungsteilnetze (10),
- mindestens drei Energiespeichernetze (13),
- mindestens neun Leistungswandler (20) und
- mindestens drei Energiespeicher (4),
wobei jedes Gleichspannungsteilnetz (10) mit jedem Energiespeichernetz (13) über mindestens einen Leistungswandler (20) verbunden ist, wobei jedes Energiespeichernetz (13) derart jeweils mit mindestens einem der Energiespeicher (4) verbunden ist, dass das jeweilige Energiespeichernetz (13) die Spannung des jeweiligen Energiespeichers (4) aufweist,
wobei jedes Gleichspannungsteilnetz (10) über mindestens eine Einspeisevorrichtung (5) mit mindestens einem Wechselspannungsnetz (6) verbindbar ist.

2. Gleichspannungsnetz (1) nach Anspruch 1, wobei die Leistungswandler (20) jeweils einen Gleichspannungswandler aufweisen und die Spannung der Energiespeicher (4) eine Gleichspannung ist.

3. Gleichspannungsnetz (1) nach Anspruch 1, wobei die Leistungswandler (20) jeweils einen Stromrichter aufweisen und die Spannung der Energiespeicher (4) eine Wechselspannung ist.

4. Gleichspannungsnetz (1) nach einem der Ansprüche 1 bis 3, wobei das Gleichspannungsnetz (1) mindestens einen Verbindungswandler (2) aufweist, wobei mittels des Verbindungswandlers (2) zwei der Gleichspannungsteilnetz (10) miteinander verbunden sind.

5. Gleichspannungsnetz (1) nach Anspruch 4, wobei die Verbindungswandler (2) in einer Sternschaltung angeordnet sind, wobei die Verbindungswandler (2) als Stromrichter ausgebildet sind, wobei ein Sternpunkt (27) der Verbindungswandler (2) ein Wechselspannungshilfsnetz (62) bildet.

6. Gleichspannungsnetz (1) nach einem der Ansprüche 1 bis 5, wobei die Einspeisevorrichtungen (5) mit dem Wechselspannungsnetz (6) verbunden sind, wobei das Wechselspannungsnetz (6) als dreiphasiges Drehstromnetz (61) ausgebildet ist, wobei die unterschiedlichen Phasen des dreiphasigen Drehstromnetzes (61) elektrische Energie in unterschiedliche Gleichspannungsteilnetze (10) einspeisen.

7. Fahrzeug, insbesondere Schiff, mit einem Gleichspannungsnetz (1) nach einem der Ansprüche 1 bis 6.

8. Verfahren zur Steuerung eines Gleichspannungsnetzes (1) nach einem der Ansprüche 1 bis 6, wobei bei Auftreten eines Fehlers im Gleichspannungsnetz (1) abhängig vom Ort des Fehlers mindestens einer der Leistungswandler (20) abgeschaltet wird.
